(19) Europäisches Patentamt / European Patent Office / Office européen des brevets

(11) **EP 2 478 334 B1**

(12) **FASCICULE DE BREVET EUROPEEN**

(45) Date de publication et mention de la délivrance du brevet:
**06.08.2014 Bulletin 2014/32**

(21) Numéro de dépôt: **10750136.3**

(22) Date de dépôt: **09.09.2010**

(51) Int Cl.:
*G01C 11/02* (2006.01)      *G01S 3/782* (2006.01)
*G01S 5/12* (2006.01)      *G01S 13/86* (2006.01)
*G01S 13/90* (2006.01)

(86) Numéro de dépôt international:
**PCT/EP2010/063260**

(87) Numéro de publication internationale:
**WO 2011/032884 (24.03.2011 Gazette 2011/12)**

(54) **LOCALISATION TRIDIMENSIONNELLE DE ZONE TERRESTRE CIBLE PAR FUSION D'IMAGES PRISES PAR DEUX CAPTEURS SATELLITAIRES**

DREIDIMENSIONALE ORTUNG EINER BESTIMMTEN LANDFLÄCHE MITTELS FUSIONIERUNG VON MIT ZWEI SATELLITENSENSOREN AUFGENOMMENEN BILDERN

THREE-DIMENSIONAL LOCATION OF TARGET LAND AREA BY MERGING IMAGES CAPTURED BY TWO SATELLITE-BASED SENSORS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **18.09.2009 FR 0956429**

(43) Date de publication de la demande:
**25.07.2012 Bulletin 2012/30**

(73) Titulaire: **Cassidian SAS**
**78990 Elancourt (FR)**

(72) Inventeur: **SEYMOUR, Michael**
**F-31450 Labastide Beauvoir (FR)**

(74) Mandataire: **Bringer, Mathieu et al**
**GEVERS FRANCE**
**9, rue Saint Antoine du T**
**31000 Toulouse (FR)**

(56) Documents cités:
**WO-A1-2009/025234      US-B1- 7 363 157**

- **GIROS A ET AL: "On the Possibility of Automatic Multisensor Image Registration", IEEE TRANSACTIONS ON GEOSCIENCE AND REMOTE SENSING, IEEE SERVICE CENTER, PISCATAWAY, NJ, US LNKD- DOI:10.1109/TGRS. 2004.835294, vol. 42, no. 10, 1 octobre 2004 (2004-10-01), pages 2104-2120, XP011120438, ISSN: 0196-2892 cité dans la demande**
- **LIAO MINGSHENG ET AL: "Precision rectification of airborne SAR image", GEOSCIENCE AND REMOTE SENSING, 1997. IGARSS '97. REMOTE SENSING - A SC IENTIFIC VISION FOR SUSTAINABLE DEVELOPMENT., 1997 IEEE INTERNATIONAL SINGAPORE 3-8 AUG. 1997, NEW YORK, NY, USA,IEEE, US, vol. 1, 3 août 1997 (1997-08-03), pages 204-206, XP010234714, ISBN: 978-0-7803-3836-4**

**Description**

La présente invention concerne d'une manière générale la télédétection spatiale d'images notamment pour l'observation de la terre. Plus particulièrement, elle concerne un procédé et un système de localisation tridimensionnelle de zone terrestre cible par fusion d'images prises par deux capteurs ayant des propriétés radiométriques différentes, comme un capteur radar et un capteur optique, embarqués dans des satellites distincts.

Deux capteurs différents produisent des images différentes de la même scène terrestre observée. Si les images sont traitées séparément, les localisations précises des pixels dans les images ne sont pas possibles dans le cas général. Il est nécessaire de recourir à une information supplémentaire consistant en un modèle numérique d'altitude de terrain MNT ("Digital Elevation Model" DEM en anglais) qui est interpolé pour trouver la localisation de chaque petite zone cible pour chaque image en utilisant les caractéristiques techniques de chaque capteur.

Un traitement de ces images ensemble après corrections de diverses distorsions produit automatiquement l'appariement de points homologues dans les deux images qui servent à estimer un modèle de déformation analytique fondé sur un calcul de mesure de similarité et au moins une interpolation pour chaque paires de points homologues.

Dans l'article de Jordi Inglada and Alain Giros, "On the Possibility of Automatic Multisensor Image Registration," IEEE TRANSACTIONS ON GEOSCIENCE AND REMOTE SENSING, Vol. 42, No. 10, pages. 2104-2120, Oct. 2004, le chapitre VII présente l'estimation d'une topographie en utilisant un capteur optique et un capteur radar sur les plateformes de deux satellites différents pointés vers un point cible. La hauteur h du point cible sur la terre considérée comme plate est donnée par la formule suivante :

$$h = \Delta x \, (\mathrm{tg}\, \alpha_1)/((\mathrm{tg}\, \alpha_1 \, \mathrm{tg}\, \alpha_2) + 1)),$$

où $\alpha_1$ et $\alpha_2$ dénotent les angles d'incidence du point cible vu par les capteurs par rapport à la terre, et $\Delta x$ le décalage entre les images du point cible fournies par les capteurs. Le décalage $\Delta x$ est égal à la somme de la distance entre la projection du point cible sur la terre et le point d'intersection de l'axe de visée du capteur optique avec la terre et de la distance entre la projection du point cible sur la terre et la projection du point cible sur la terre perpendiculairement à l'axe de visée du capteur radar, en supposant un front d'onde plan émis par le capteur radar.

Une telle estimation n'est pas assez précise pour localiser tridimensionnellement chaque petite zone cible dans les images afin d'enregistrer une topographie tridimensionnelle de la scène. Le capteur radar mesure implicitement la distance entre le centre de phase de l'antenne et la zone cible. Pour cette raison, l'angle d'incidence associé au capteur radar ne peut pas être mesuré avec précision.

Si le capteur optique et le capteur radar sont embarqués sur la plate-forme d'un unique satellite, soit $\alpha_1 = \alpha_2 \equiv \alpha$, la formule précédente s'écrit :

$$h = \Delta x \, (\mathrm{tg}\, \alpha)/((\mathrm{tg}\, \alpha)^2 + 1)), \text{ soit } h = \Delta x \, (\sin 2\alpha)/2.$$

Pratiquement, les capteurs ne seront pas montés pour avoir un angle d'incidence identique. Il y aura toujours un biais dans le calcul de localisation.

Chacune de ces formules signifie que la hauteur h du point cible à mesurer est proportionnelle au décalage mesuré entre les images du point cible et indépendante des altitudes des capteurs.

Cette approche trigonométrique de la fusion de données issues d'un capteur optique et d'un capteur radar est aussi trop simpliste. Pour avoir une position tridimensionnelle, il faut prendre en compte d'autres transformations liées aux positions et orientations des capteurs.

L'objectif de l'invention est de localiser tridimensionnellement avec une plus grande précision une zone terrestre cible par la fusion de données acquises issues d'un capteur optique et d'un capteur radar, en dépendance des positions des satellites supportant les capteurs.

Pour atteindre cet objectif, un procédé pour localiser tridimensionnellement une zone terrestre cible terrestre au moyen d'un capteur optique et d'un capteur radar embarqués respectivement dans des satellites, comprenant des mesures des positions des satellites lorsque les capteurs pointent vers des zones terrestres, est caractérisé en ce qu'il comprend une mesure d'une direction de visée du capteur optique et une prise d'image d'une zone terrestre pour chacune des positions mesurées du capteur optique, une mesure de la distance entre une zone terrestre et le capteur radar et une prise d'image de la zone terrestre pour chacune des positions mesurées du capteur radar, une comparaison des images prises par le capteur optique et des images prises par le capteur radar, un appariement des images de zones terrestres prises par les capteurs optique et radar et couvrant des zones terrestres communes, et une détermination de la distance entre la zone terrestre cible sélectionnée parmi les zones terrestres communes et le capteur optique en

EP 2 478 334 B1

fonction des positions des capteurs, de la distance entre la zone terrestre cible et le capteur radar et de la direction de visée du capteur optique associées aux images prises par les capteurs optique et radar couvrant la zone terrestre cible.

La distance entre la zone terrestre cible et le capteur optique est ainsi déterminée en fonction de quelques données simples mesurées précisément notamment à bord des satellites co-localisés, par une approche de fusion de deux équations relatives aux capteurs, sans faire des approximations sur la position des satellites, ce qui permet de fournir avec une grande précision la position de la zone terrestre cible visée par les capteurs.

L'invention peut être utilisée pour établir un modèle numérique d'altitude de terrain tridimensionnelle de la scène ou pour des projections cartographiques précises à partir de l'enregistrement des images fournies respectivement par les satellites en utilisant des critères mutuels pour harmoniser les disparités entres deux images d'une même zone terrestre cible prises à des instants a priori différents par les capteurs. En outre, l'usage actuel seulement de capteurs optiques, ou de capteurs radar, à très haute résolution et la nécessité de produire des modèles numériques d'altitude de qualité élevée justifient l'exploitation industrielle de l'invention qui, grâce à la combinaison de quelques données fournies par un capteur optique avec quelques données fournies par un capteur radar, est peu complexe.

Comme on le verra dans la suite, la détermination de la distance entre la zone terrestre cible et le capteur optique comprend une résolution d'une équation quadratique de cette distance qui résulte de la combinaison de deux équations liées aux capteurs. La résolution de l'équation quadratique revient
à déterminer les deux solutions de distance suivantes :

$$\delta = \vec{u}_O{}^\mathsf{T} (\vec{p}_R - \vec{p}_O) \pm ([\vec{u}_O{}^\mathsf{T} (\vec{p}_R - \vec{p}_O)]^2 - |\vec{p}_R - \vec{p}_O|^2 + d_R{}^2)^{1/2},$$

dans lesquelles $\bar{p}_O$ et $\bar{p}_R$ dénotent les positions des satellites embarquant le capteur optique et le capteur radar, $d_R$ dénote la distance entre la zone terrestre cible et le capteur radar et $\bar{u}_O$ dénote la direction de visée du capteur optique vers la zone terrestre cible, et
à sélectionner celle des deux solutions de distance qui est inférieure au rayon de la terre.

L'invention a aussi pour objet un système et un dispositif de localisation tridimensionnelle d'une zone cible terrestre.

Le système comprend un capteur optique et un capteur radar embarqués respectivement dans des satellites, un moyen pour mesurer des positions du satellite embarquant le capteur optique lorsque le capteur optique est apte à pointer vers des zones terrestres, et un moyen pour mesurer des positions du satellite embarquant le capteur radar lorsque le capteur radar est apte à pointer vers des zones terrestres. Le système est caractérisé en ce qu'il comprend un moyen pour mesurer une direction de visée du capteur optique et prendre une image d'une zone terrestre pour chacune des positions mesurées du capteur optique, un moyen pour mesurer la distance entre une zone terrestre et le capteur radar et prendre une image de la zone terrestre pour chacune des positions mesurées du capteur radar, un moyen pour comparer des images prises par le capteur optique et des images prises par le capteur radar, un moyen pour apparier des images de zones terrestres prises par les capteurs optique et radar et couvrant des zones terrestres communes, et un moyen pour déterminer la distance entre la zone terrestre cible sélectionnée parmi les zones terrestres communes et le capteur optique en fonction des positions des capteurs, de la distance entre la zone terrestre cible et le capteur radar et de la direction de visée du capteur optique associées aux images prises par les capteurs optique et radar couvrant la zone terrestre cible

Le dispositif est apte à recevoir des positions mesurées de satellites lorsqu'un capteur optique et un capteur radar embarqués respectivement dans des satellites sont aptes à pointer vers des zones terrestres, pour localiser tridimensionnellement une zone terrestre cible. Le dispositif est caractérisé en ce qu'il comprend un moyen pour comparer des images de zones terrestres prises par le capteur optique et associées à des positions mesurées et des directions de visée mesurées du capteur optique et des images de zones terrestres prises par le capteur radar et associées à des positions mesurées du capteur radar et à des distances mesurées depuis le capteur radar, un moyen pour apparier des images de zones terrestres prises par les capteurs optique et radar et couvrant des zones terrestres communes, et un moyen pour déterminer la distance entre la zone terrestre cible sélectionnée parmi les zones terrestres communes et le capteur optique en fonction des positions des capteurs, de la distance entre la zone terrestre cible et le capteur radar et de la direction de visée du capteur optique associées aux images prises par les capteurs optique et radar couvrant la zone terrestre cible.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 montre schématiquement un système de localisation tridimensionnelle de zone terrestre cible selon l'invention ; et

3

- la figure 2 est un algorithme d'un procédé de localisation tridimensionnelle de zone terrestre cible selon l'invention.

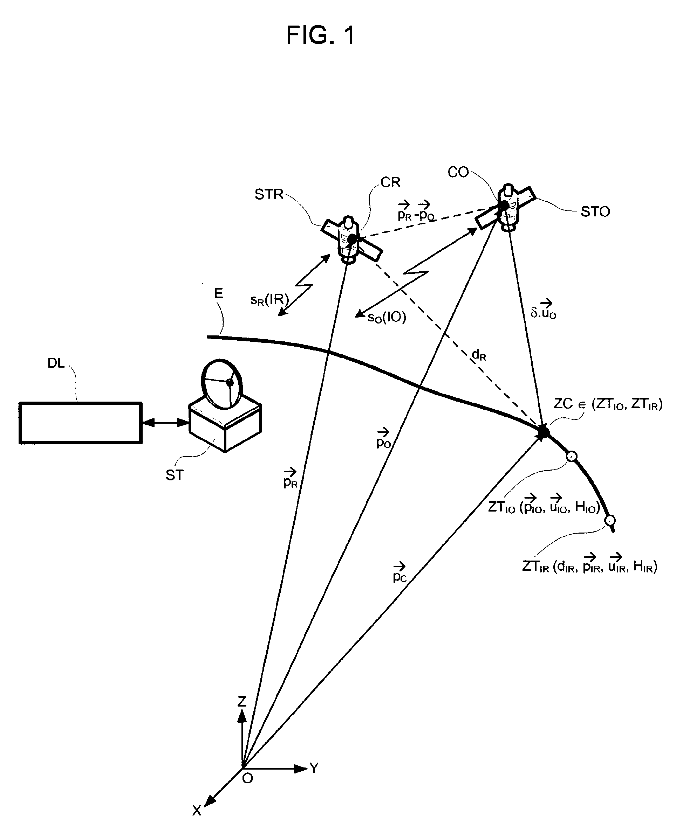

En référence à la figure 1, un système de localisation tridimensionnelle de zone terrestre cible comprend un capteur optique CO, un capteur radar CR et un dispositif de localisation tridimensionnelle de zone terrestre DL. Le capteur optique CO est embarqué sur la plate-forme d'un premier satellite STO. Le capteur optique comporte un système d'imagerie interne ayant une matrice de photodétecteurs à transfert de charge CCD ("Charged Coupled Device" en anglais) situé dans le plan focal d'un système optique, dont l'axe de visée a une direction par rapport à la terre mesurable dans le capteur, et une partie électronique analogique et numérique pour restituer et mémoriser des images bidimensionnelles. Le capteur radar CR est un radar imageur à synthèse d'ouverture SAR ("Synthetic Aperture Radar" en anglais) embarqué sur la plate-forme d'un deuxième satellite STR. Le dispositif DL peut comprendre par exemple un ordinateur situé au sol et par exemple relié, ou intégré, à au moins une station terrestre de poursuite multi-satellitaire ST en communication avec les satellites STO et STR et synchrone avec les horloges des satellites.

Le capteur optique CO et le capteur radar CR transmettent des signaux $s_O$ et $s_R$ relayés par la station ST vers le dispositif DL afin que la station acquière périodiquement diverses données numériques transmises par les satellites, comme les positions géographiques des satellites mesurées par ceux-ci avec des données d'horodatage. Les signaux $s_O$ et $s_R$ peuvent supporter à des instants, différents a priori, respectivement une image optique IO et une image radar IR avec leurs dates respectives, couvrant chacune une zone terrestre cible ZC. Les instants de prise de l'image optique et de l'image radar peuvent différer de quelques heures, jours ou mois. Chaque capteur mémorise des images de zones terrestres respectives et les retransmet classiquement avec des données du capteur et du satellite embarquant le capteur au dispositif DL via la station ST lorsque celle-ci est en exposition directe de l'antenne du satellite pour que le dispositif DL enregistre les données, puis les traite ultérieurement selon l'invention.

La zone terrestre cible ZC est de très petite dimension par rapport à la surface de la terre E. Par exemple, la zone ZC a un diamètre de quelques mètres et est localisée par son point central sur la surface de la terre. La zone ZC est à localiser par le dispositif DL par rapport à un référentiel tridimensionnel OXYZ qui est par exemple fixe et lié à la terre et dont l'origine O est au centre de la terre. Dans le référentiel OXYZ, la position recherchée de la zone cible ZC est définie par un vecteur de position $\vec{p}_C$ ($p_C(X)$, $p_C(Y)$, $p_C(Z)$), la position du capteur optique satellitaire CO est définie par un vecteur de position $\vec{p}_O$($p_O(X)$, $p_O(Y)$, $p_O(Z)$) lorsque le capteur CO pointe vers la zone cible ZC, et la position du capteur radar satellitaire CR est définie par un vecteur de position $\vec{p}_R$ ($p_R(X)$, $p_R(Y)$, $p_R(Z)$), lorsque le capteur CR pointe vers la zone cible ZC.

Par rapport au capteur optique CO, le vecteur de position $\vec{p}_C$ de la zone terrestre cible ZC dépend du vecteur de position $\vec{p}_O$ du capteur optique CO, de coordonnées x et y de la zone cible ZC dans un référentiel situé sur le plan focal du système optique interne au capteur optique CO, de la distance focale f du système optique, d'une matrice de rotation R et d'un facteur d'échelle k, selon l'équation vectorielle suivante :

$$\vec{p}_C = \vec{p}_O + kR\begin{bmatrix} x \\ y \\ -f \end{bmatrix} \qquad (1),$$

qui peut s'écrire :

$$\begin{bmatrix} x \\ y \\ -f \end{bmatrix} = R^{-1}(\vec{p}_C - \vec{p}_O)/k \qquad (2).$$

La matrice de rotation R transforme les coordonnées d'un vecteur de direction dans le plan focal en les coordonnées de ce vecteur de direction dans le référentiel OXYZ lié à la terre E :

$$R^{-1} = \begin{bmatrix} r_{11} & r_{21} & r_{13} \\ r_{12} & r_{22} & r_{23} \\ r_{13} & r_{23} & r_{33} \end{bmatrix}.$$

Les coefficients $r_{11}$ à $r_{33}$ de la matrice de rotation R dépendent notamment de l'orientation de la plate-forme supportant le capteur optique CO dans le satellite STO, de la position et de l'orientation de miroirs tournants sur le chemin optique dans le système optique, et de l'orientation du capteur optique par rapport aux récepteurs dans la station de poursuite ST reliée au dispositif de localisation DL et donc par rapport au référentiel OXYZ fixe.

La résolution des trois équations de colinéarité déduites de l'équation vectorielle (2) conduit aux coordonnées x et y de la zone cible ZC en fonction de la distance focale f et des différences entre les coordonnées de la position $\vec{p}_C(p_C(X), p_C(Y), p_C(Z))$ de la zone cible ZC et de la position $\vec{p}_O$ ($p_O(X)$, po(Y), $p_O(Z)$) du capteur optique CO, après avoir remplacé le facteur k déduit de la troisième équation de colinéarité dans les deux premières équations de colinéarité :

$$x = -f \; \frac{r_{11}[p_C(X) - p_O(X)] + r_{21}[p_C(Y) + p_O(Y)] + r_{31}[p_C(Z) - p_O(Z)]}{r_{13}[p_C(X) - p_O(X)] + r_{23}[p_C(Y) - p_O(Y)] + r_{33}[p_C(Z) - p_O(Z)]} \qquad (3)$$

$$y = -f \; \frac{r_{12}[p_C(X) - p_O(X)] + r_{22}[p_C(Y) + p_O(Y)] + r_{32}[p_C(Z) - p_O(Z)]}{r_{13}[p_C(X) - p_O(X)] + r_{23}[p_C(Y) - p_O(Y)] + r_{33}[p_C(Z) - p_O(Z)]} \qquad (4).$$

Pour une seule image optique, les équations (3) et (4), qui définissent les coordonnées x et y de la zone cible visée par le capteur optique CO dépendant des propriétés du capteur optique, ne peuvent être résolues sans recourir à un modèle d'altitude MNT de la surface de la terre E.

L'équation vectorielle (1) peut s'écrire différemment selon l'équation suivante (5) dans laquelle la position de la zone cible ZC s'exprime en fonction de la distance $\delta$ en mètre entre la zone cible ZC et le capteur optique CO et d'un vecteur unitaire $\vec{u}_O$ suivant la direction de visée depuis le capteur optique vers la zone cible dans le référentiel OXYZ :

$$\vec{p}_C = \vec{p}_O + \delta \, \vec{u}_O \qquad (5).$$

Par rapport au capteur radar CR ayant un vecteur de position connu $\vec{p}_R$ et situé à une distance $d_R$ de la zone terrestre cible ZC déduite du retour des échos radar reçus par le capteur CR, le vecteur de position $\vec{p}_C$ de la zone cible est déduit d'une première équation géométrique dans le référentiel OXYZ :

$$d_R = |\, \vec{p}_R - \vec{p}_C \,| \qquad (6)$$

et d'une deuxième équation déduite du cône de fréquence Doppler ayant pour sommet le capteur CR et relative à la fréquence Doppler $f_{dop}$ en hertz du satellite STR supportant le capteur radar CR et ayant la vitesse $\vec{v}_R$ par rapport à la vitesse $\vec{v}_C$ de la zone cible ZC dans le référentiel OXYZ, pour une longueur d'onde radar $\lambda$ en mètre correspondant à la fréquence centrale des signaux radar émis par le capteur radar CR du satellite STR vers la zone cible :

$$f_{dop} = \frac{2}{\lambda} \times \frac{(\vec{p}_R - \vec{p}_C)^T}{(\vec{p}_R - \vec{p}_C)} (\vec{v}_R - \vec{v}_C) \qquad (7),$$

T désignant l'opérateur de transposition matricielle.

D'une manière similaire aux deux équations (3) et (4), les équations (6) et (7) sont ambiguës pour une seule image radar. Des données externes sous la forme d'un modèle numérique d'altitude MNT de la scène observée autour de la zone cible sont nécessaires pour résoudre complètement les équations (6) et (7) dans lesquelles les coordonnées x et y de la zone cible dépendent des propriétés du capteur radar, afin de localiser la zone cible par ses coordonnées.

La géo-localisation tridimensionnelle de la zone terrestre cible par chacun des deux systèmes d'équations (3-4) et (6-7) est ainsi relativement complexe puisqu'elle recourt à un modèle numérique d'altitude MNT qui doit être interpolé pour localiser précisément la zone cible. Pour chacun de ces deux systèmes d'équations, ceci peut être évité en collectant deux images de la zone cible selon le même procédé, optique ou radar, depuis un satellite correspondant équipé d'un capteur optique ou d'un capteur radar. Dans le cas d'un satellite avec capteur optique, la géo-localisation est appelée stéréogrammétrie. Dans le cas d'un satellite avec capteur radar, la géolocalisation est appelée radargrammétrie et revient à trouver l'intersection de deux arcs pour localiser tridimensionnellement la zone cible. Avec l'apparition des systèmes de géo-localisation par satellites GPS ("Global Positioning System" en anglais) et pour le cas de satellites équipés de capteurs optiques, ces difficultés sont quelque peu atténuées par une modélisation de l'orbite et de l'orientation des capteurs optiques ce qui conduit à la possibilité d'un traitement automatique d'images sans points de contrôle externes.

Selon l'invention, le dispositif de localisation DL fusionne des données du capteur optique CO dans le premier satellite STO et des données du capteur radar CR dans le deuxième satellite STR, en remplaçant le vecteur de position $\vec{p}_C$ de la zone cible dans l'équation (6) par sa valeur déduite de l'équation (5) afin d'obtenir la distance recherchée $\delta$ entre la zone cible ZC et le capteur optique CO :

$$d_R = \left| \vec{p}_R - \vec{p}_O - \delta\, \vec{u}_O \right| \qquad\qquad (8)$$

Cette équation représente l'intersection du vecteur $\overline{p}_R - \overline{p}_O - \delta\, \overline{u}_O$ avec une sphère de rayon $d_R$ centrée sur le capteur radar CR.

On obtient en élevant au carré les deux membres de l'équation (8) :

$$d_R{}^2 = \left( \vec{p}_R - \vec{p}_O - \delta\, \vec{u}_O \right)^T \left( \vec{p}_R - \vec{p}_O - \delta\, \vec{u}_O \right)$$

puis en regroupant les différences des vecteurs de position du capteur radar et du capteur optique :

$$d_R{}^2 = \left( \vec{p}_R - \vec{p}_O \right)^T \left( \vec{p}_R - \vec{p}_O \right) - 2\, \delta\, \vec{u}_O{}^T \left( \vec{p}_R - \vec{p}_O \right) + \delta^2\, \vec{u}_O{}^T\, \vec{u}_O\,,$$

une équation du second degré en $\delta$ :

$$\delta^2 - 2\, \vec{u}_O{}^T \left( \vec{p}_R - \vec{p}_O \right) \delta + \left( \vec{p}_R - \vec{p}_O \right)^T \left( \vec{p}_R - \vec{p}_O \right) - d_R{}^2 = 0\,,$$

dont les deux solutions sont :

$$\delta_1 = \vec{u}_O{}^T \left( \vec{p}_R - \vec{p}_O \right) + \left( [\, \vec{u}_O{}^T \left( \vec{p}_R - \vec{p}_O \right)]^2 - \left| \vec{p}_R - \vec{p}_O \right|^2 + d_R{}^2 \right)^{1/2},$$

$$\delta_2 = \vec{u}_O{}^T \left( \vec{p}_R - \vec{p}_O \right) - \left( [\, \vec{u}_O{}^T \left( \vec{p}_R - \vec{p}_O \right)]^2 - \left| \vec{p}_R - \vec{p}_O \right|^2 + d_R{}^2 \right)^{1/2} \qquad (9).$$

Parmi les solutions $\delta_1$ et $\delta_2$, celle positive et inférieure au rayon RE de la terre est la distance correcte $\delta$ depuis le capteur optique CO à la zone cible ZC.

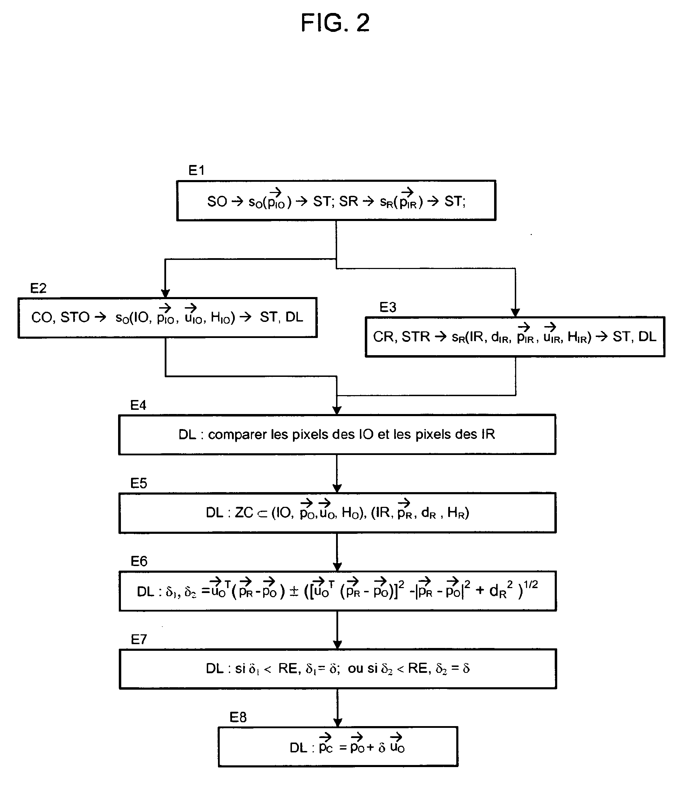

En se référant maintenant à la figure 2, le procédé de localisation tridimensionnelle de zone terrestre cible selon l'invention comprend des étapes E1 à E8 afin que le dispositif DL détermine la distance $\delta$ entre une zone terrestre cible ZC et le capteur optique CO.

Initialement à l'étape E1, la station de poursuite ST acquiert périodiquement diverses données numériques supportées par les signaux $s_O$ et $s_R$ émis par les satellites et incluant notamment les positions géographiques $\vec{p}_O$ et $\vec{p}_R$

des satellites STO et STR, confondues avec celles des capteurs CO et CR, mesurées par les satellites dans le référentiel fixe OXYZ, lorsque le capteur optique et le capteur radar pointent respectivement vers des zones terrestres a priori différentes. En variante, les positions des satellites STO et STR sont mesurées par la station ST en liaison avec des balises sur la terre. A l'étape E2, des images IO de zones terrestres $ZT_{IO}$ prises par le capteur optique CO et, en association avec chacune des images prises IO, notamment la position mesurée $\vec{p}_{IO}$ du capteur optique CO, la direction de visée mesurée $\vec{u}_{IO}$ du capteur optique vers la zone terrestre $ZT_{IO}$ dans le référentiel fixe OXYZ et des données d'horodatage $H_{IO}$ de la prise de l'image IO sont transmises via le signal $s_O$ par le satellite STO à la station de poursuite ST. La station ST retransmet chaque image prise IO avec les données $\vec{p}_{IO}$, $\vec{u}_{IO}$ et $H_{IO}$ associées à l'image IO au dispositif DL qui les mémorise dans une base de données. De même, à l'étape E3 qui peut être antérieure ou postérieure à l'étape E2, le satellite STR transmet via le signal $s_R$ des images IR de zones terrestres $ZT_{IR}$ prises par le capteur radar CR et, en association avec chacune des images prises IR, notamment la distance $d_{IR}$ du capteur radar à la terre E, la position $\vec{p}_{IR}$ du capteur radar CR et la direction de visée $\vec{u}_{IR}$ du capteur radar vers la zone terrestre $ZT_{IR}$ dans le référentiel fixe OXYZ et des données d'horodatage $H_{IR}$ de la prise de l'image IR à la station de poursuite ST. La station ST retransmet chaque image prise IR et les données précédentes $d_{IR}$, $\vec{p}_{IR}$, $\vec{u}_{IR}$ et $H_{IR}$ associées à l'image IR au dispositif DL qui les mémorise dans la base de données. Dans la figure 1, une seule zone terrestre quelconque $ZT_{IO}$ prise par le capteur optique CO et une seule zone terrestre quelconque $ZT_{IR}$ prise par le capteur radar CR sont représentées.

Le dispositif DL classe les images mémorisées IO et IR avec leurs données mémorisées associées telles que $\vec{p}_{IO}$, $\vec{u}_{IO}$, $H_{IO}$ et $d_{IR}$, $\vec{p}_{IR}$, $\vec{u}_{IR}$, $H_{IR}$ en fonction de leurs données d'horodatage. Le dispositif DL analyse les images IO prises par le capteur optique et les images IR prises par le capteur radar et compare leurs pixels à l'étape E4. Puis l'ordinateur apparie et mémorise des images IO et IR de zones terrestres $ZT_{IO}$ et $ZT_{IR}$ couvrant des zones terrestres communes à l'étape E5. Une image IO et une image IR appariées ont en commun au moins un nombre élevé prédéterminé de pixels définissant une zone terrestre commune. Les quelques pixels différents entre les images appariées IO et IR prises a priori à des instants différents $H_{IO}$ et $H_{IR}$ peuvent résulter de quelques changements de la zone terrestre commune prise, par exemple comme un arbre avec des feuilles en été et le même arbre sans feuilles en hiver, ou comme une construction ou un véhicule n'apparaissant que dans l'une des images appariées. Pour deux images appariées IO et IR ayant en commun une zone terrestre cible ZC, sélectionnée parmi les zones terrestres communes, le dispositif DL lit en mémoire leurs données associées $\vec{p}_O \equiv \vec{p}_{IO}$, $\vec{u}_O \equiv \vec{u}_{IO}$, $H_O \equiv H_{IO}$ et $d_R \equiv d_{IR}$, $\vec{p}_R \equiv \vec{p}_{IR}$, $\vec{u}_R \equiv \vec{u}_{IR}$, $H_R \equiv H_{IR}$. En particulier, le dispositif DL connaît la direction de visée $\vec{u}_O$ du capteur optique CO et la direction de visée $\vec{u}_R$ du capteur radar CR lorsque les capteurs pointaient vers la zone terrestre cible ZC aux instants $H_{IO}$ et $H_{IR}$.

Puis à l'étape E6, le dispositif DL détermine les solutions de distance $\delta_1$ et $\delta_2$ entre la zone terrestre cible sélectionnée ZC et le capteur optique CO selon les relations (9), en fonction des données associées aux deux images appariées incluant la zone terrestre cible telles que les positions $\vec{p}_O$ et $\vec{p}_R$ des satellites et donc des capteurs, la distance $d_R$ entre la zone cible et le capteur radar CR et la direction de visée $\vec{u}_O$ du capteur optique CO vers la zone cible ZC. A l'étape E7, le dispositif DL compare chacune des solutions de distance $\delta_1$ et $\delta_2$ au rayon RE de la terre et sélectionne la solution qui est positive et inférieure au rayon RE de la terre et qui constitue la distance correcte $\delta$ entre le capteur optique CO et la zone cible ZC lors de la prise de l'image IO.

Finalement, le dispositif DL déduit à l'étape E8 les trois coordonnées du vecteur de position $\vec{p}_C = \vec{p}_O + \delta\, \vec{u}_O$ de la zone cible ZC dans le référentiel OXYZ et particulièrement son altitude en fonction de la distance $\delta$, selon l'équation (5). La distance correcte $\delta$ et la position $\vec{p}_C$ sont déterminées directement selon l'invention, sans l'aide d'un modèle numérique d'altitude MNT.

L'invention décrite ici concerne un procédé, un système et un dispositif pour localiser tridimensionnellement une zone terrestre cible. Selon une implémentation, les étapes du procédé de l'invention sont déterminées par les instructions d'un programme d'ordinateur incorporé dans le dispositif. Le programme d'ordinateur apte à être mis en oeuvre dans le dispositif de localisation de l'invention comporte des instructions de programme qui, lorsque ledit programme est exécuté dans le dispositif dont le fonctionnement est alors commandé par l'exécution du programme, réalisent une comparaison d'images, un appariement d'images et une détermination de la distance entre une zone cible et un capteur optique conformément au procédé de l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans le dispositif via un réseau de communication, comme internet.

Le support d'enregistrement peut être n'importe quelle entité ou dispositif capable de stocker le programme.

Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

**Revendications**

**1.** Procédé pour localiser tridimensionnellement une zone terrestre cible (ZC) au moyen d'un capteur optique (CO) et d'un capteur radar (CR) embarqués respectivement dans des satellites (STO, STR), comprenant des mesures (E1) des positions $(\vec{p}_{IO}, \vec{p}_{IR})$ des satellites lorsque les capteurs pointent vers des zones terrestres, **caractérisé en ce qu'**il comprend une mesure (E2) d'une direction de visée $(\vec{u}_{IO})$ du capteur optique et une prise d'image (IO) d'une zone terrestre (ZT$_{IO}$) pour chacune des positions mesurées $(\vec{p}_{IO})$ du capteur optique (CO), une mesure (E3) de la distance (d$_{IR}$) entre une zone terrestre (ZT$_{IR}$) et le capteur radar (CR) et une prise d'image (IR) de la zone terrestre (ZT$_{IR}$) pour chacune des positions mesurées $(\vec{p}_{IR})$ du capteur radar (CR), une comparaison (E4) des images (IO) prises par le capteur optique (CO) et des images (IR) prises par le capteur radar (CR), un appariement (E5) des images (IO, IR) de zones terrestres (ZT$_{IO}$, ZT$_{IR}$) prises par les capteurs optique et radar et couvrant des zones terrestres communes, et une détermination (E6, E7) de la distance ($\delta$) entre la zone terrestre cible sélectionnée parmi les zones terrestres communes et le capteur optique en fonction des positions $(\vec{p}_O, \bar{p}_R)$ des capteurs, de la distance (d$_R$) entre la zone terrestre cible et le capteur radar et de la direction de visée $(\vec{u}_O)$ du capteur optique associées aux images prises par les capteurs optique et radar couvrant la zone terrestre cible.

**2.** Procédé conforme à la revendication 1, selon lequel la détermination de la distance ($\delta$) entre la zone terrestre cible (ZC) et le capteur optique (CO) comprend une résolution (E6) d'une équation quadratique de la distance ($\delta$) entre la zone terrestre cible et le capteur optique dépendant des positions $(\vec{p}_O, \vec{p}_R)$ des satellites, de la distance (d$_R$) entre la zone terrestre cible et le capteur radar et de la direction de visée $(\vec{u}_O)$ du capteur optique vers la zone terrestre cible en deux solutions de distance, et une sélection (E7) de l'une des deux solutions de distance qui est inférieure au rayon de la terre.

**3.** Procédé conforme à la revendication 1 ou 2, selon lequel la détermination de la distance ($\delta$) entre la zone terrestre cible (ZC) et le capteur optique (CO) comprend
une détermination (E6) des deux solutions de distance suivantes :

$$\delta = \vec{u}_O^{\mathsf{T}} (\vec{p}_R - \vec{p}_O) \pm ([\vec{u}_O^{\mathsf{T}} (\vec{p}_R - \vec{p}_O)]^2 - |\vec{p}_R - \vec{p}_O|^2 + d_R^2)^{1/2},$$

dans lesquelles $\bar{p}_O$ et $\bar{p}_R$ dénotent les positions des satellites (STO, STR) embarquant le capteur optique (CO) et le capteur radar (CR), d$_R$ dénote la distance entre la zone terrestre cible et le capteur radar et $\bar{u}_O$ dénote la direction de visée du capteur optique vers la zone terrestre cible, et
une sélection (E7) de l'une des deux solutions de distance qui est inférieure au rayon de la terre.

**4.** Système pour localiser tridimensionnellement une zone terrestre cible (ZC), comprenant un capteur optique (CO) et un capteur radar (CR) embarqués respectivement dans des satellites (STO, STR), un moyen (STO) pour mesurer des positions $(\vec{p}_{IO})$ du satellite (STO) embarquant le capteur optique lorsque le capteur optique est apte à pointer vers des zones terrestres, et un moyen (STR) pour mesurer des positions $(\vec{p}_{IR})$ du satellite (STR) embarquant le capteur radar lorsque le capteur radar est apte à pointer vers des zones terrestres, **caractérisé en ce qu'**il comprend un moyen (CO) pour mesurer une direction de visée $(\vec{u}_{IO})$ du capteur optique et prendre une image (IO) d'une zone terrestre (ZT$_{IO}$) pour chacune des positions mesurées $(\vec{p}_{IO})$ du capteur optique (CO), un moyen (CR) pour mesurer la distance (d$_{IR}$) entre une zone terrestre (ZT$_{IR}$) et le capteur radar et prendre une image (IR) de la zone terrestre (ZT$_{IR}$) pour chacune des positions mesurées $(\vec{p}_{IR})$ du capteur radar, un moyen (DL) pour comparer des images (IO) prises par le capteur optique (CO) et des images (IR) prises par le capteur radar (CR), un moyen (DL) pour apparier des images (IO, IR) de zones terrestres (ZT$_{IO}$, ZT$_{IR}$) prises par les capteurs optique et radar et couvrant des zones terrestres communes, et un moyen (DL) pour déterminer la distance ($\delta$) entre la zone terrestre cible sélectionnée parmi les zones terrestres communes et le capteur optique en fonction des positions des capteurs, de la distance entre la zone terrestre cible et le capteur radar et de la direction de visée du capteur optique associées aux images prises par les capteurs optique et radar couvrant la zone terrestre cible.

5. Dispositif (DL) apte à recevoir des positions mesurées ($\vec{p}_{IO}$, $\vec{p}_{IR}$) de satellites (STO, STR) lorsqu'un capteur optique (CO) et un capteur radar (CR) embarqués respectivement dans les satellites (STO, STR) sont aptes à pointer vers des zones terrestres, pour localiser tridimensionnellement une zone terrestre cible (ZC), **caractérisé en ce qu'**il comprend un moyen (CA) pour comparer des images (IO) de zones terrestres (ZT$_{IO}$) prises par le capteur optique (CO) et associées à des positions mesurées ($\vec{p}_{IO}$) et des directions de visée mesurées ($\vec{u}_{IO}$) du capteur optique (CO) et des images (IR) de zones terrestres (ZT$_{IR}$) prises par le capteur radar (CR) et associées à des positions mesurées ($\vec{p}_{IR}$) du capteur radar (CR) et à des distances mesurées (d$_{IR}$) depuis le capteur radar, un moyen (CA) pour apparier des images (IO, IR) de zones terrestres (ZT$_{IO}$, ZT$_{IR}$) prises par les capteurs optique et radar et couvrant des zones terrestres communes, et un moyen (CA) pour déterminer la distance ($\delta$) entre la zone terrestre cible sélectionnée parmi les zones terrestres communes et le capteur optique en fonction des positions ($\vec{p}_O$, $\vec{p}_R$) des capteurs, de la distance (d$_R$) entre la zone terrestre cible et le capteur radar et de la direction de visée ($\vec{u}_O$) du capteur optique associées aux images prises par les capteurs optique et radar couvrant la zone terrestre cible.

6. Programme d'ordinateur apte à être mis en oeuvre dans un dispositif (DL) apte à recevoir des positions mesurées ($\vec{p}_{IO}$, $\vec{p}_{IR}$) de satellites (STO, STR) lorsqu'un capteur optique (CO) et un capteur radar (CR) embarqués respectivement dans les satellites (STO, STR) sont aptes à pointer vers des zones terrestres, pour localiser tridimensionnellement une zone terrestre cible (ZC), ledit programme étant **caractérisé en ce qu'**il comprend des instructions qui, lorsque le programme est exécuté dans ledit dispositif, réalisent les étapes de comparaison d'images (E4), d'appariement d'images (E5) et de détermination de distance (E6, E7) selon l'une des revendications 1 à 3.

**Patentansprüche**

1. Verfahren zur dreidimensionalen Lokalisierung einer terrestrischen Zielzone (ZC) mit Hilfe eines optischen Sensors (CO) und eines Radarsensors (CR), die jeweils in Satelliten (STO, STR) eingebaut sind, umfassend Messungen (E1) der Positionen ($\vec{P}_{IO}$, $\vec{P}_{IR}$) der Satelliten, wenn die Sensoren auf terrestrische Zonen zeigen, **dadurch gekennzeichnet, dass** es eine Messung (E2) einer Zielrichtung ($\vec{u}_{IO}$) des optischen Sensors und eine Bildaufnahme (IO) einer terrestrischen Zone (ZT$_{IO}$) für jede der gemessenen Positionen (P$_{IO}$) des optischen Sensors (CO), eine Messung (E3) der Distanz (d$_{IR}$) zwischen einer terrestrischen Zone (ZT$_{IR}$) und dem Radarsensor (CR) und eine Bildaufnahme (IR) der terrestrischen Zone (ZT$_{IR}$) für jede der gemessenen Positionen ($\vec{P}_{IR}$) des Radarsensors, einen Vergleich (E4) der von dem optischen Sensor (CO) aufgenommenen Bilder (IO) und der von dem Radarsensor (CR) aufgenommenen Bilder (IR), eine Abstimmung (E5) der Bilder (IO, IR) von terrestrischen Zonen (ZT$_{IO}$, ZT$_{IR}$), die von dem optischen Sensor und dem Radarsensor aufgenommen wurden und gemeinsame terrestrische Zonen abdecken, und eine Bestimmung (E6, E7) der Distanz ($\delta$) zwischen der ausgewählten terrestrischen Zielzone unter den gemeinsamen terrestrischen Zonen und dem optischen Sensor in Abhängigkeit von den Positionen ($\vec{P}_O$, $\vec{P}_R$) der Sensoren, von der Distanz (d$_R$) zwischen der terrestrischen Zielzone und dem Radarsensor und von der Zielrichtung ($\vec{u}_O$) des optischen Sensors in Verbindung mit den von dem optischen Sensor und dem Radarsensor, die die terrestrische Zielzone abdecken, aufgenommenen Bildern umfasst.

2. Verfahren nach Anspruch 1, bei die Bestimmung der Distanz ($\delta$) zwischen der terrestrischen Zielzone (ZC) und dem optischen Sensor (CO) eine Lösung (E6) einer quadratischen Gleichung der Distanz ($\delta$) zwischen der terrestrischen Zielzone und dem optischen Sensor in Abhängigkeit von den Positionen ($\vec{P}_O$, $\vec{P}_R$) der Satelliten, von der Distanz (d$_R$) zwischen der terrestrischen Zielzone und dem Radarsensor und von der Zielrichtung ($\vec{u}_O$) des optischen Sensors zu der terrestrischen Zielzone in zwei Distanzlösungen und eine Auswahl (E7) einer der beiden Distanzlösungen, die kleiner als der Radius der Erde ist, umfasst.

3. Verfahren nach Anspruch 1 oder 2, bei dem die Bestimmung der Distanz ($\delta$) zwischen der terrestrischen Zielzone (ZC) und dem optischen Sensor (CO) umfasst:

eine Bestimmung (E6) der beiden folgenden Distanzlösungen:

$$\delta = \bar{u}_O{}^\mathsf{T} \left( \bar{p}_R - \bar{p}_O \right) \pm \left( \left[ \bar{u}_O{}^\mathsf{T} \left( \bar{p}_R - \bar{p}_O \right) \right]^2 - \left| \bar{p}_R - \bar{p}_O \right|^2 + d_R{}^2 \right)^{1/2},$$

wobei $\bar{P}_O$ und $\bar{P}_R$ die Positionen der Satelliten (STO, STR), die den optischen Sensor (CO) und den Radarsensor (CR) umfassen, kennzeichnen, $d_R$ die Distanz zwischen der terrestrischen Zielzone und dem Radarsensor kennzeichnet, und $\bar{u}_O$ die Zielrichtung des optischen Sensors zu der terrestrischen Zielzone kennzeichnet, und eine Auswahl (E7) einer der beiden Distanzlösungen, die kleiner als der Radius der Erde ist.

4. System zur dreidimensionalen Lokalisierung einer terrestrischen Zielzone (ZC), umfassend einen optischen Sensor (CO) und einen Radarsensor (CR), die jeweils in Satelliten (STO, STR) eingebaut sind, ein Mittel (STO) zum Messen der Positionen ($\vec{P}_{IO}$) des Satelliten (STO), der den optischen Sensor umfasst, wenn der optische Sensor geeignet ist, zu terrestrischen Zonen zu zeigen, und ein Mittel (STR) zum Messen der Positionen ($\vec{P}_{IR}$) des Satelliten (STR), der den Radarsensor umfasst, wenn der Radarsensor geeignet ist, zu terrestrischen Zonen zu zeigen, **dadurch gekennzeichnet, dass** es ein Mittel (CO) umfasst, um eine Zielrichtung ($\vec{u}_{IO}$) des optischen Sensors zu messen und ein Bild (IO) von einer terrestrischen Zone ($ZT_{IO}$) für jede der gemessenen Positionen ($\vec{P}_{IO}$) des optischen Sensors (CO) aufzunehmen, ein Mittel (CR), um die Distanz ($d_{IR}$) zwischen einer terrestrischen Zone ($ZT_{IR}$) und dem Radarsensor zu messen und ein Bild (IR) von der terrestrischen Zone ($ZT_{IR}$) für jede der gemessenen Positionen ($\vec{P}_{IR}$) des Radarsensors aufzunehmen, ein Mittel (DL), um Bilder (IO), die von dem optischen Sensor (CO) aufgenommen wurden, und Bilder (IR), die von dem Radarsensor (CR) aufgenommen wurden, zu vergleichen, ein Mittel (DL), um Bilder (IO, IR) von terrestrischen Zonen ($ZT_{IO}$, $ZT_{IR}$), die von dem optischen Sensor und dem Radarsensor aufgenommen wurden und gemeinsame terrestrische Zonen abdecken, abzustimmen, und ein Mittel (DL), um die Distanz ($\delta$) zwischen der ausgewählten terrestrischen Zielzone unter den gemeinsamen terrestrischen Zonen und dem optischen Sensor in Abhängigkeit von den Positionen der Sensoren, der Distanz zwischen der terrestrischen Zielzone und dem Radarsensor und der Zielrichtung des optischen Sensors in Verbindung mit den von dem optischen Sensor und dem Radarsensor, die die terrestrische Zielzone abdecken, aufgenommenen Bildern zu bestimmen.

5. Vorrichtung (DL), die geeignet ist, gemessene Positionen ($\vec{P}_{IO}$, $\vec{P}_{IR}$) von Satelliten (STO, STR) zu empfangen, wenn ein optischer Sensor (CO) und ein Radarsensor (CR), die jeweils in die Satelliten (STO, STR) eingebaut sind, geeignet sind, auf terrestrische Zonen zu zeigen, um dreidimensional eine terrestrische Zielzone (ZC) zu lokalisieren, **dadurch gekennzeichnet, dass** sie ein Mittel (CA) umfasst, um Bilder (IO) von terrestrischen Zonen ($ZT_{IO}$), die von dem optischen Sensor (CO) aufgenommen wurden und mit gemessenen Positionen ($\vec{P}_{IO}$) und gemessenen Zielrichtungen ($\vec{u}_{IO}$) des optischen Sensors (CO) verbunden sind, und Bilder (IR) von terrestrischen Zonen ($ZT_{IR}$), die von dem Radarsensor (CR) aufgenommen wurden und mit gemessenen Positionen ($\vec{P}_{IR}$) des Radarsensors (CR) und gemessenen Distanzen ($d_{IR}$) von dem Radarsensor verbunden sind, zu vergleichen, ein Mittel (CA), um Bilder (IO, IR) von terrestrischen Zonen ($ZT_{IO}$, $ZT_{IR}$), die von dem optischen Sensor und dem Radarsensor aufgenommen wurden und gemeinsame terrestrische Zonen abdecken, abzustimmen, und ein Mittel (CA), um die Distanz ($\delta$) zwischen der ausgewählten terrestrischen Zielzone unter den gemeinsamen terrestrischen Zonen und dem optischen Sensor in Abhängigkeit von den Positionen ($\vec{P}_O$, $\vec{P}_R$) der Sensoren, der Distanz ($d_R$) zwischen der terrestrischen Zielzone und dem Radarsensor und der Zielrichtung ($\vec{u}_O$) des optischen Sensors in Verbindung mit den von dem optischen Sensor und dem Radarsensor, die die terrestrische Zielzone abdecken, aufgenommenen Bildern zu bestimmen.

6. Computerprogramm, das geeignet ist, in einer Vorrichtung (DL) eingesetzt zu werden, die geeignet ist, gemessene Positionen ($\vec{P}_{IO}$, $\vec{P}_{IR}$) von Satelliten (STO, STR) zu empfangen, wenn ein optischer Sensor (CO) und ein Radarsensor (CR), die jeweils in die Satelliten (STO, STR) eingebaut sind, geeignet sind, auf terrestrische Zonen zu zeigen, um dreidimensional eine terrestrische Zielzone (ZC) zu lokalisieren, wobei das Programm **dadurch gekennzeichnet ist, dass** es Instruktionen umfasst, die, wenn das Programm in der Vorrichtung ausgeführt wird, die Schritte des Bildvergleichs (E4), der Bildabstimmung (E5) und der Distanzbestimmung (E6, E7) nach einem der Ansprüche 1 bis 3 durchführen.

**EP 2 478 334 B1**

**Claims**

1. A method for locating a target land area (ZC) three-dimensionally by means of an optical sensor (CO) and a radar sensor (CR) carried respectively in satellites (STO, STR), comprising measuring (E1) the positions ($\vec{p}_{IO}$, $\vec{p}_{IR}$) of the satellites when the sensors point at land areas, wherein it comprises measuring (E2) a sight direction ($\vec{u}_{IO}$) of the optical sensor and capturing an image (IO) of a land area (ZT$_{IO}$) for each of the measured positions ($\vec{p}_{IO}$) of the optical sensor (CO), measuring (E3) the distance (d$_{IR}$) between a land area (ZT$_{IR}$) and the radar sensor (CR) and capturing an image (IR) of the land area (ZT$_{IR}$) for each of the measured positions ($\vec{p}_{IR}$) of the radar sensor (CR), comparing (E4) the images (IO) captured by the optical sensor (CO) and the images (IR) captured by the radar sensor (CR), matching (E5) the images (IO, IR) of land areas (ZT$_{IO}$, ZT$_{IR}$) captured by the optical and radar sensors and covering common land areas, and determining (E6, E7) the distance ($\delta$) between the target land area selected from the common land areas and the optical sensor as a function of the positions ($\vec{p}_O$, $\vec{p}_R$) of the sensors, the distance (d$_R$) between the target land area and the radar sensor, and the sight direction ($\vec{u}_O$) of the optical sensor, which are associated with the images captured by the optical and radar sensors covering the target land area.

2. The method as claimed in claim 1, wherein determining the distance ($\delta$) between the target land area (ZC) and the optical sensor (CO) comprises solving (E6) a quadratic equation of the distance ($\delta$) between the target land area and the optical sensor dependent on the positions ($\vec{p}_O$, $\vec{p}_R$) of the satellites, the distance (d$_R$) between the target land area and the radar sensor, and the sight direction ($\vec{u}_O$) of the optical sensor toward the target land area to give two solutions of distance, and selecting (E7) the one of the two solutions of distance which is less than the radius of the earth.

3. The method as claimed in claim 1 or 2, wherein determining the distance ($\delta$) between the target land area (ZC) and the optical sensor (CO) comprises determining (E6) the following two solutions of distance:

$$\delta = \vec{u}_O^{\top} (\vec{p}_R - \vec{p}_O) \pm ([\vec{u}_O^{\top} (\vec{p}_R - \vec{p}_O)]^2 - |\vec{p}_R - \vec{p}_O|^2 + d_R^2)^{1/2},$$

in which $\bar{p}_O$ and $\bar{p}_R$ denote the positions of the satellites (STO, STR) carrying the optical sensor (CO) and the radar sensor (CR), d$_R$ denotes the distance between the target land area and the radar sensor and $\bar{u}_O$ denotes the sight direction of the optical sensor towards the target land area, and
selecting (E7) the one of the two solutions of distance which is less than the radius of the earth.

4. A system for locating a target land area (ZC) three-dimensionally, comprising an optical sensor (CO) and a radar sensor (CR) carried respectively in satellites (STO, STR), a means (STO) for measuring positions ($\vec{p}_{IO}$) of the satellite (STO) carrying the optical sensor when the optical sensor is capable of pointing at land areas, and a means (STR) for measuring positions ($\vec{p}_{IR}$) of the satellite (STR) embedding the radar sensor when the radar sensor is capable of pointing at land areas, wherein it comprises a means (CO) for measuring a sight direction ($\vec{u}_{IO}$) of the optical sensor and capturing an image (IO) of a land area (ZT$_{IO}$) for each of the measured positions ($\vec{p}_{IO}$) of the optical sensor (CO), a means (CR) for measuring the distance (d$_{IR}$) between a land area (ZT$_{IR}$) and the radar sensor and capturing an image (IR) of the land area (ZT$_{IR}$) for each of the measured positions ($\vec{p}_{IR}$) of the radar sensor, a means (DL) for comparing images (IO) captured by the optical sensor (CO) and images (IR) captured by the radar sensor (CR), a means (DL) for matching images (IO, IR) of land areas (ZT$_{IO}$, ZT$_{IR}$) captured by the optical and radar sensors and covering common land areas, and a means (DL) for determining the distance ($\delta$) between the target land area selected from the common land areas and the optical sensor as a function of the positions of the sensors, the distance between the target land area and the radar sensor, and the sight direction of the optical sensor, which are associated with the images captured by the optical and radar sensors covering the target land area.

5. A device (DL) capable of receiving measured positions ($\vec{p}_{IO}$, $\vec{p}_{IR}$) of satellites (STO, STR) when an optical sensor (CO) and a radar sensor (CR) carried respectively in the satellites (STO, STR) are capable of pointing at land areas, for locating a target land area (ZC) three-dimensionally, wherein it comprises a means (CA) for comparing images (IO) of land areas (ZT$_{IO}$) captured by the optical sensor (CO) and associated with measured positions ($\vec{p}_{IO}$) and measured sight directions ($\vec{u}_{IO}$) of the optical sensor (CO) and images (IR) of land areas (ZT$_{IR}$) captured by the

**11**

radar sensor (CR) and associated with measured positions $(\vec{p}_{IR})$ of the radar sensor (CR) and with measured distances ($d_{IR}$) from the radar sensor, a means (CA) for matching images (IO, IR) of land areas ($ZT_{IO}$, $ZT_{IR}$) captured by the optical and radar sensors and covering common land areas, and a means (CA) for determining the distance ($\delta$) between the target land area selected from the common land areas and the optical sensor as a function of the positions $(\vec{p}_O, \vec{p}_R)$ of the sensors, the distance ($d_R$) between the target land area and the radar sensor, and the sight direction $(\vec{u}_O)$ of the optical sensor, which are associated with the images captured by the optical and radar sensors covering the target land area.

6. A computer program capable of being implemented in a device (DL) capable of receiving measured positions $(\vec{p}_{IO}$, $\vec{p}_{IR})$ of satellites (STO, STR) when an optical sensor (CO) and a radar sensor (CR) embedded respectively on the satellites (STO, STR) are capable of pointing at land areas, for locating a target land area (ZC) three-dimensionally, wherein said program comprises instructions which, when the program is executed in said device, carry out the steps of comparing images (E4), matching images (E5) and determining distance (E6, E7) as claimed in any one of claims 1 to 3.

# FIG. 1

# FIG. 2

E1

$$SO \rightarrow s_O(\vec{p_{IO}}) \rightarrow ST; \quad SR \rightarrow s_R(\vec{p_{IR}}) \rightarrow ST;$$

E2

$$CO, STO \rightarrow s_O(IO, \vec{p_{IO}}, \vec{u_{IO}}, H_{IO}) \rightarrow ST, DL$$

E3

$$CR, STR \rightarrow s_R(IR, d_{IR}, \vec{p_{IR}}, \vec{u_{IR}}, H_{IR}) \rightarrow ST, DL$$

E4

$$DL : \text{comparer les pixels des IO et les pixels des IR}$$

E5

$$DL : ZC \subset (IO, \vec{p_O}, \vec{u_O}, H_O), (IR, \vec{p_R}, d_R, H_R)$$

E6

$$DL : \delta_1, \delta_2 = \vec{u_O}^T(\vec{p_R} - \vec{p_O}) \pm \left([\vec{u_O}^T(\vec{p_R} - \vec{p_O})]^2 - |\vec{p_R} - \vec{p_O}|^2 + d_R^2\right)^{1/2}$$

E7

$$DL : \text{si } \delta_1 < RE, \delta_1 = \delta; \text{ ou si } \delta_2 < RE, \delta_2 = \delta$$

E8

$$DL : \vec{p_C} = \vec{p_O} + \delta \vec{u_O}$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE JORDI INGLADA ; ALAIN GIROS.** On the Possibility of Automatic Multisensor Image Registration. *IEEE TRANSACTIONS ON GEOSCIENCE AND REMOTE SENSING,* Octobre 2004, vol. 42 (10), 2104-2120